Europäisches Patentamt

European Patent Office

Office européen des brevets

(19)

(11) Publication number: **0 261 247**

**A1**

(12)

# EUROPEAN PATENT APPLICATION

published in accordance with Art. 158(3) EPC

(21) Application number: **87901687.1**

(22) Date of filing: **17.03.87**

Data of the international application taken as a basis:

(86) International application number:
**PCT/JP87/00165**

(87) International publication number:
**WO87/05725 (24.09.87 87/21)**

(51) Int. Cl.³: **G 06 F 11/28**
**G 06 F 9/44**

(30) Priority: **17.03.86 JP 586/87**

(43) Date of publication of application:
**30.03.88 Bulletin 88/13**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **TANAKA, Kunio**
**5-8-13, Tamakawa-cho Akishima-shi**
**Tokyo 196(JP)**

(72) Inventor: **ISHII, Seiji Takahatadai-Danchi 24-502 850**
**Misawa**
**Hino-shi**
**Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF EXECUTING EMULATION.**

(57) A method of executing emulation to debug high-level language programs based upon the emulation. In translating a high-level language program (11) into a machine language (13) by compiler (12), a first computer unit (1) prepares a translation table (14) which indicates the correspondence among a line number $L_i$, an instruction for the line number, and an address $A_i$ of a memory (21) that stores a machine language corresponding to the instruction, for each of the lines of the high-level language program. The first computer unit (1) then inputs the machine language (13) and the translation table (14) to a second computer unit (2) working as a debugger. Based on the machine language (11) stored in the memory (21), the second computer unit (2) executes the program, recognizes the line number and the instruction of the high-level language program that corresponds to the machine language that is being executed using the memory address of the machine language and the translation table (14), prepares a debugging picture using the line number and the instruction, and draws it on a display (3).

FIG. 1

EP 0 261 247 A1

Croydon Printing Company Ltd.

-1-

DESCRIPTION

EMULATION EXECUTING METHOD

Technical Field

This invention relates a method of executing an emulation and, more particularly, to an emulation executing method well-suited for application to debugging of a program prepared in a high-level language.

Background Art

The term "emulation" refers to one computer being made to imitate the operation of another computer, thereby to execute the program (a program on the machine language level) of the latter.

When a program prepared in a high-level language is debugged, debugging can be accomplished by executing the aforementioned emulation. For example, there is a method which includes converting a program prepared in the high-level language (FORTRAN, COBOL, PASCAL) of a first computer into a machine language (e.g. assembler language, etc.) executable by a second computer, and performing debugging by having the second computer execute processing conforming to the high-level language program on the basis of the aforementioned machine language.

However, difficulty is encountered in the debugging operation using this method since correspondence between the machine language being executed by the second computer and the instructions in the high-level language program cannot be grasped.

Accordingly, an object of the invention is to provide an emulation processing method through which debugging of a high-level language program is performed by emulation and instructions in a high-level language program corresponding to a machine language presently being executed can be distinguished.

Disclosure of the Invention

In translating a high-level language program into machine language by a compiler, a first computer prepares a translation table indicating the correspondence among a line number $L_i$ for every line of the high-level language program, an instruction at the line number, and a storage area address $A_i$ for storing the machine language conforming to the instruction, and inputs the translation table along with the machine language to a second computer serving as a debugger.

The second computer executes a program on the basis of the machine language, uses the address storing the machine language and the correspondence table to recognize the line number and instruction of the high-level language program corresponding to the machine language presently being executed, forms a debugging display picture using the line number and instruction, and presents the picture on a display unit.

This makes it possible for an operator to perform debugging based on the high-level language and not the machine language.

## Brief Description of the Drawings

Fig. 1 is a block diagram of a system for practicing the emulation executing method of the invention, and

Fig. 2 is a view for describing the relationship between addresses in a translation table and machine language storage areas.

## Best Mode for Carrying Out the Invention

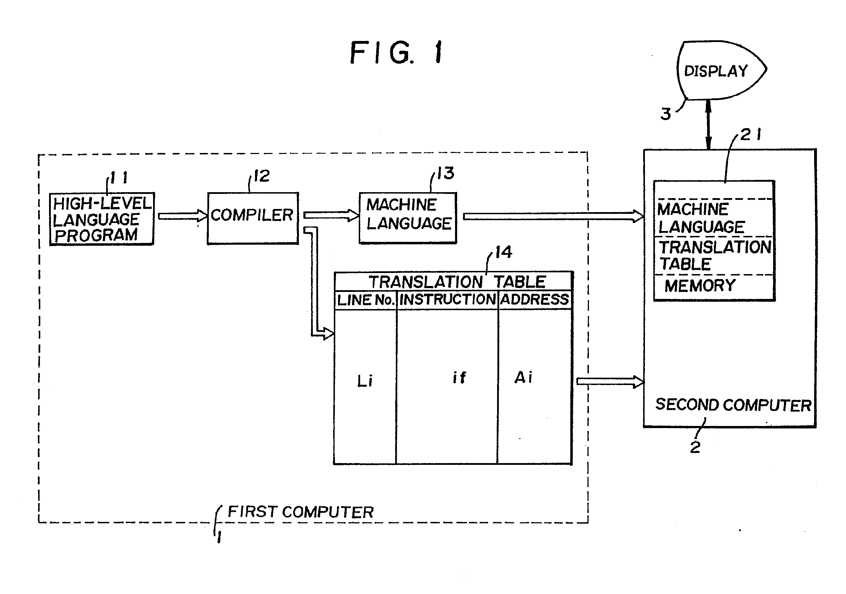

Fig. 1 is a block diagram of a system for practicing the emulation executing method of the invention.

Numeral 1 denotes a first computer capable of operating on the basis of a high-level language program, numeral 2 designates a second computer, e.g. a debugger, capable of operating on the basis of a machine language such as assembler language, and numeral 3 represents a display unit. The debugger 2 constituted by the second computer executes instructions on the assembler language level. By sequentially executing instructions one at a time, the debugger 2 verifies the results of branch instructions, confirms whether execution is being performed in accordance with the logic design, and both displays and modifies the contents of hardware registers or specific address memories as well as the on/off states of flags.

Numeral 11 denotes a high-level language program prepared in a high-level language such as FORTRAN, COBOL or PASCAL, 12 an editor (compiler), 13 machine language such as assembler language, and 14 a translation table giving the correspondence among a line number $L_i$ for every line of the high-level language program 11, an instruction at the line number, and a storage area address $A_i$ for storing the machine language conforming to the instruction. Numeral 21 denotes a memory for storing the machine language and translation table.

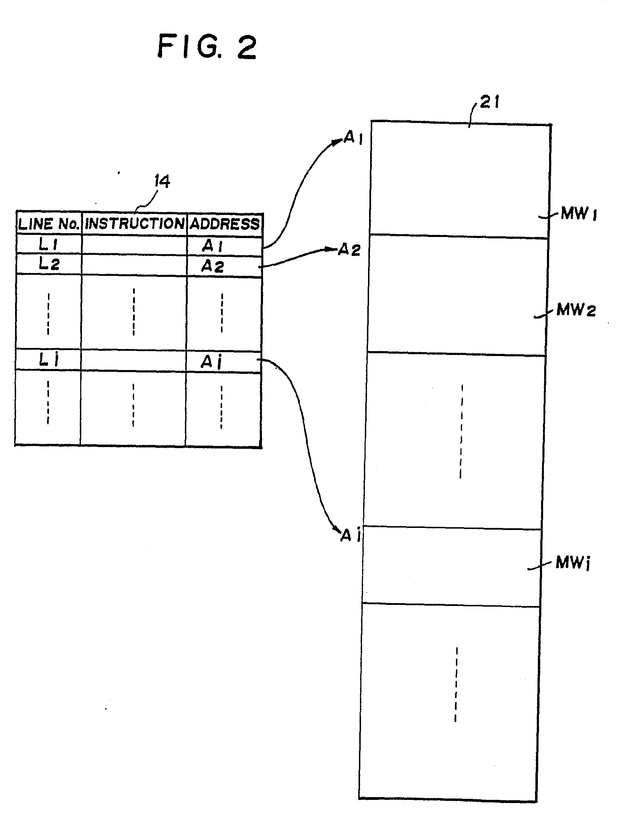

Fig. 2 is a view for describing the relationship between the address $A_i$ in translation table 14 and storage areas in the memory 21 for storing the machine language. The instructions on the respective lines of the high-level language program 11 are translated into one or more machine languages and then stored in the memory 21 of the second computer (debugger) 2. It should be noted that the machine language corresponding to the instruction on line number $L_i$ (i = 1, 2, ...) is stored in a storage area $NW_i$ (i = 1, 2, ...) starting from address $A_i$ of memory 21.

Emulation processing according to the invention will now be described.

First, in the first computer, the high-level language program 11 is converted into the machining language 13 by the compiler 12, the machine language is stored in the memory 21 (Fig. 2) of the second computer 2, the translation table 14 is prepared to give the correspondence among line number $L_i$ for every line of the high-level language program 11, an instruction at the line number, and storage area address $A_i$ of memory 21 for storing the machine language conforming to the instruction, and the translation table is inputted to the second computer 2.

The second computer 2 successively executes the program on the basis of the machine language 13 stored in memory 21, refers to the translation table 14 to recognize the line number and instruction in the high-level language program 11 corresponding to the address of the machine language presently being executed, prepares a debugging display by using the line number and instruction, and presents the display on the display unit 3.

This makes it possible for an operator to perform debugging based on the high-level language and not the machine language while observing the display screen.

Thus, in accordance with the present invention, a translation table is prepared giving the correspondence among a line number $L_i$ for every line of a high-level language program, an instruction at the line number, and a storage area address $A_i$ for storing the machine language conforming to the instruction. As a result, the line number and instruction of a high-level language correponding to a machine language presently being executed can be recognized by referring to the translation table. This makes it possible to prepare a debugging display using the line number and instruction

0261247

of the high-level language and, hence, to perform debugging based on the high-level language and not the machine language.

CLAIMS:

1.   An emulation executing method for translating a high-level language program of a first computer into a machine language executable by a second computer and causing the second computer to execute said program on the basis of said machine language to debug said program, characterized in that:

in translating the high-level language program into the machine language, the first computer prepares a translation table indicating correspondence among a line number for every line of said high-level language program, an instruction at said line number, and a storage area address for storing said machine language conforming to said instruction, and

the second computer executes a program on the basis of the machine language, and refers to said translation table to recognize the line number and instruction of the high-level language corresponding to the machine language presently being executed.

2.   The emulation executing method according to claim 1, characterized in that the first computer inputs the prepared translation table and program in the machine language to the second computer, and the second computer stores said translation table and program in the machine language in a memory.

3.   The emulation executing method according to claim 2, characterized in that the second computer obtains from the translation table a line number and

0261247

instruction conforming to an address storing the machining language presently being executed, prepares a debugging display picture and displays the picture on a display unit.

# FIG. 1

DISPLAY

3

21

FIRST COMPUTER

1

| 11 | 12 | 13 |
|---|---|---|
| HIGH-LEVEL LANGUAGE PROGRAM | COMPILER | MACHINE LANGUAGE |

MACHINE LANGUAGE

TRANSLATION TABLE

MEMORY

## TRANSLATION TABLE
14

| LINE No. | INSTRUCTION | ADDRESS |
|---|---|---|
| Li | if | Ai |

SECOND COMPUTER

2

# FIG. 2

| LINE No. | INSTRUCTION | ADDRESS |
|----------|-------------|---------|
| L1 | | A1 |
| L2 | | A2 |
| ⋮ | ⋮ | ⋮ |
| Li | | Ai |
| ⋮ | ⋮ | ⋮ |

14

A1
A2
Ai

21

MW1
MW2
MWi

# INTERNATIONAL SEARCH REPORT

0261247

International Application No PCT/JP87/00165

## I. CLASSIFICATION OF SUBJECT MATTER (if several classification symbols apply, indicate all) [3]

According to International Patent Classification (IPC) or to both National Classification and IPC

Int.Cl$^4$    G06F11/28, 9/44

## II. FIELDS SEARCHED

### Minimum Documentation Searched [4]

| Classification System | Classification Symbols |
|---|---|
| IPC | G06F11/28, 9/44 |

### Documentation Searched other than Minimum Documentation to the Extent that such Documents are Included in the Fields Searched [5]

| | |
|---|---|
| Jitsuyo Shinan Koho | 1970 - 1986 |
| Kokai Jitsuyo Shinan Koho | 1971 - 1986 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | JP, A, 57-100544 (Mitsubishi Electric Corporation) 22 June 1982 (22. 06. 82) (Family: none) | 1, 2 |
| X | JP, A, 58-94041 (NEC Corporation) 4 June 1983 (04. 06. 83) (Family: none) | 1-3 |
| X | JP, A, 60-175155 (Mitsubishi Electric Corporation) 9 September 1985 (09. 09. 85) (Family: none) | 1-3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| May 29, 1987 (29. 05. 87) | June 15, 1987 (15. 06. 87) |
| International Searching Authority [1] | Signature of Authorized Officer [20] |
| Japanese Patent Office | |

Form PCT/ISA/210 (second sheet) (October 1977)